(19) Europäisches Patentamt
European Patent Office
Office européen des brevets

(11) Veröffentlichungsnummer: **0 252 877 B1**

(12) **EUROPÄISCHE PATENTSCHRIFT**

(45) Veröffentlichungstag der Patentschrift: **20.03.91**

(51) Int. Cl.⁵: **C08K 5/34**, C08K 5/35, C08L 101/00, //(C08L101/00, 79:04)

(21) Anmeldenummer: **87810358.9**

(22) Anmeldetag: **24.06.87**

Die Akte enthält technische Angaben, die nach dem Eingang der Anmeldung eingereicht wurden und die nicht in dieser Patentschrift enthalten sind.

# (54) Synergistisches Stabilisatorgemisch.

(30) Priorität: **30.06.86 CH 2619/86**

(43) Veröffentlichungstag der Anmeldung:
**13.01.88 Patentblatt 88/02**

(45) Bekanntmachung des Hinweises auf die Patenterteilung:
**20.03.91 Patentblatt 91/12**

(84) Benannte Vertragsstaaten:
**DE FR GB IT**

(56) Entgegenhaltungen:
**EP-A- 0 006 213**
**EP-A- 0 080 431**

**RESEARCH DISCLOSURE, Nr. 255, Juli 1985, Seiten 330-331, Artikel Nr. 25508, Hampshire, GB; (Ciba-Geigy AG): Stabilization of polyethylene films"**

(73) Patentinhaber: **CIBA-GEIGY AG**
**Klybeckstrasse 141**
**CH-4002 Basel(CH)**

(72) Erfinder: **Gugumus, François, Dr.**
**Burgfeldermattweg 17**
**CH-4123 Allschwil(CH)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft ein Stabilisatorsystem enthaltend zwei hochmolekulare Polyalkylpiperidine dessen Verwendung zum Stabilisieren von synthetischen polymeren sowie das mit dem erwähnten Stabilisatorsystem gegen lichtinduzierten Abbau geschützte synthetische polymer.

Es sind eine Reihe von hochmolekularen Polyalkylpiperidinen bekannt, welche sich als Lichtschutzmittel eignen. In der US-A-4 233 412 werden z.B. Kondensations- und Additionspolymere beschrieben, die sterisch gehinderte Piperidingruppen enthalten, und in den US-A-4 086 204 und 4 331 586 werden Piperidingruppen enthaltende Triazinpolymere offenbart.

In der EP-A-80 431 werden Mischungen von niedermolekularen und hochmolekularen Polyalkylpiperidinen als Stabilisatorsystem für organisches Material beschrieben.

In der JP-A-85-115644 werden stabilisierte Polyolefinzusammensetzungen beschrieben, die Formamidine und Polyalkylpiperidine enthalten. Aus der JP-A-85-124 642 sind stabilisierte Polyolefinzusammensetzungen bekannt, die Polyalkylpiperidine, sterisch gehinderte Phenole und Phosphite enthalten.

Gegenstand der vorliegenden Erfindung ist ein Stabilisatorsystem enthaltend

a) mindestens ein Polyalkylpiperidin der Formel I,

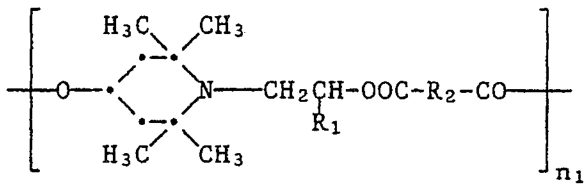

(I)

worin $R_1$ Wasserstoff oder Methyl bedeutet, $R_2$ eine direkte Bindung oder $C_1$-$C_{10}$-Alkylen ist und $n_1$ eine ganze Zahl von 2 bis 100 darstellt, und

b) mindestens ein Polyalkylpiperidin der Formel II,

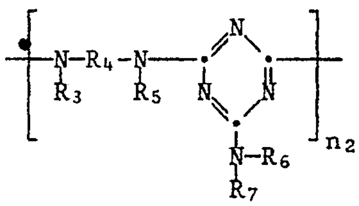

(II)

worin

$R_3$, $R_5$ und $R_6$ unabhängig voneinander Wasserstoff, $C_1$-$C_4$-Alkyl, Phenyl, durch -OH und/oder $C_4$- $C_8$ -Alkyl substituiertes Phenyl, Benzyl, durch -OH und/oder $C_4$-$C_8$ -Alkyl substituiertes Benzyl oder eine Gruppe der Formel III bedeuten,

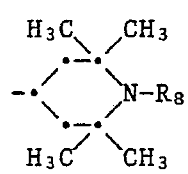

(III)

worin $R_8$ Wasserstoff, $C_1$-$C_4$-Alkyl, durch -OH substituiertes $C_1$-$C_4$-Alkyl, Benzyl, Alkyl,Acetyl Oder Crotonoyl bedeutet, mit der Bedingung, dass das an das Stickstoffatom der Piperidylgruppe gebundene C-Atom ein primäres Kohlenstoffatom ist, $R_4$ $C_2$-$C_8$-Alkylen ist und $R_7$ Wasserstoff, $C_1$-$C_{10}$-Alkyl, Fhenyl, durch -OH und/oder $C_4$-$C_8$-Alkyl substituiertes Phenyl, Benzyl, durch -OH und/oder $C_4$-$C_8$-Alkyl substituiertes Benzyl oder eine Gruppe der Formel III bedeutet oder die Reste $R_6$ und $R_7$ zusammen mit dem Stickstoffatom, an das sie gebunden sind, einen 6-gliedrigen heterocyclischen Ring bilden, $n_2$ eine ganze zahl von 2 bis 100 ist und mindestens einer der Reste $R_3$, $R_5$, $R_6$ und $R_7$ eine Gruppe der Formel III darstellt.

$R_2$ bedeutet als $C_1$-$C_{10}$-Alkylen beispielsweise 1,2-Ethylen, 1,3- oder 1,2-Propylen, Tetramethylen, Pentamethylen, 2,2-Dimethyl-1,3-propy-len, Hexamethylen, Heptamethylen, Octamethylen oder Decamethylen. Bevorzugt ist geradkettiges $C_1$-$C_4$-Alkylen und besonders bevorzugt Ethylen.

$R_3$, $R_5$ und $R_6$ bedeuten als $C_1$-$C_4$-Alkyl beispielsweise Methyl, Ethyl, Propyl, Isopropyl, n-Butyl oder tert-Butyl.

$R_3$, $R_5$, $R_6$ und $R_7$ bedeuten als Phenyl, welches durch -OH und/oder $C_4$-$C_8$- Alkyl substituiert ist, zum Beispiel tert-Butylphenyl oder 3, 5-Di-tert-butyl-4-hydroxyphenyl. 3,5-Di-tert-butyl-4-hydroxyphenyl ist besonders bevorzugt.

$R_3$, $R_5$, $R_6$ und $R_7$ bedeuten als Benzyl, welches durch -OH und/oder $C_4$-$C_8$-Alkyl substituiert ist, beispielsweise tert-Butylbenzyl oder 3,5-Di-tert-butyl-4-hydroxybenzyl. 3,5-Di-tert-butyl-4-hydroxybenzyl ist besonders bevorzugt.

$R_4$ bedeutet als $c_2$-$C_8$-Alkylen beispielsweise 1,2-Ethylen, 1,3- oder 1,2-Propylen, Tetramethylen, Pentamethylen, 2,2-Dimethyl-1,3-propylen, Hexamethylen, Heptamethylen oder Octamethylen. Bevorzugt ist besonders Hexamethylen.

$R_7$ bedeutet als $c_1$ -$C_{10}$-Alkyl zum Beispiel Methyl, Ethyl, Propyl, Isopropyl, n-Butyl, tert-Butyl, Pentyl, Hexyl, Octyl, 1,1,3,3-Tetramethylbutyl, Nonyl oder Decyl. 1,1,3,3-Tetramethylbutyl ist besonders bevorzugt.

$R_8$ bedeutet als $C_1$-$C_4$-Alkyl, welches gegebenenfalls durch -OH substituiert sein kann, zum Beispiel Methyl, Ethyl, Propyl, Isopropyl, Butyl, tert-Butyl, 2-Hydroxyethyl oder 2-Hydroxypropyl. Bevorzugt sind insbesondere Methyl, 2-Hydroxyethyl und 2-Hydroxypropyl.

Die Reste $R_3$ und $R_5$ bedeuten bevorzugt eine Gruppe der Formel III, worin $R_8$ bevorzugt Wasserstoff ist.

Die Reste $R_6$ und $R_7$ bilden zusammen mit dem Stickstoffatom, an das sie gebunden sind, bevorzugt einen 6-gliedrigen heterocyclischen Ring, wie beispielsweise Pyrrolidin-1-yl, Piperidino, Piperazin-1-yl, 4-Methylpiperazin-1-yl oder Morpholino. Morpholino ist besonders bevorzugt.

Die Bedeutungen der Endgruppen, die in den Verbindungen der Formeln I und II die freien Valenzen absättigen, sind abhängig von den zur Herstellung benutzten Verfahren.

Die Verbindungen der Formeln I und II sind bekannt (teilweise im Handel erhältlich) und können nach bekannten Verfahren, zum Beispiel wie in den US-A-4 233 412 und 4 086 204 beschrieben, hergestellt werden.

Erfolgt die Herstellung der Verbindungen der Formel I z.B. durch Umsetzung einer Verbindung der Formel

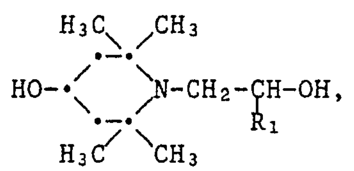

worin $R_1$ Wasserstoff oder Methyl bedeutet, mit einem Dicarbonsäurediester der Formel
$R_9OOC$-$R_2$-$COOR_9$ ,
worin $R_9$ beispielsweise Methyl, Ethyl oder Propyl ist und $R_2$ die oben angegebene Bedeutung hat, so ist die Endgruppe, die an den 2,2,6,6-Tetramethyl-4-oxypiperidin-1-ylrest gebunden ist, Wasserstoff oder -CO-$R_2$-$COOR_9$ und die Endgruppe, die an den Diacylrest gebunden ist, bedeutet -O-$R_9$ oder

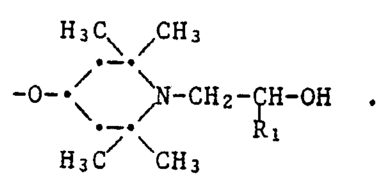

Erfolgt die Herstellung der Verbindungen der Formel II z.B. durch Umsetzung einer Verbindung der Formel

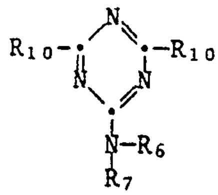

,

worin $R_{10}$ beispielsweise Chlor bedeutet und $R_6$ und $R_7$ die oben angegebenen Definitionen besitzen, mit einer Verbindung der Formel

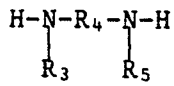

,

worin $R_3$, $R_4$ und $R_5$ die oben angegebenen Bedeutungen haben, so ist die Endgruppe, die an den Diaminorest gebunden ist, Wasserstoff oder

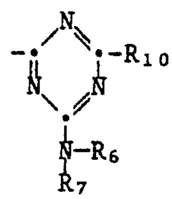

,

und die Endgruppe, die an den Triazinrest gebunden ist,bedeutet

$-R_{10}$ oder 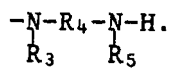 .

Bedeutet $R_{10}$ ein Halogen, wie beispielsweise Chlor, so ist es vorteilhaft, dieses nach beendeter Umsetzung z.B. durch -OH oder eine Aminogruppe auszutauschen. Als Aminogruppen seien beispielsweise genannt: $-NH_2$, $-NH(C_1\text{-}C_8\text{-Alkyl})$, $-N(C_1\text{-}C_8\text{-Alkyl})_2$, Pyrrolidin-1-yl und Morpholino.

Ebenfalls bevorzugt ist ein Stabilisatorgemisch enthaltend a) mindestens ein Polyalkylpiperidin der Formel I und b) mindestens ein Polyalkylpiperidin der Formel II, worin $R_3$ und $R_5$ eine Gruppe der Formel III bedeuten.

$R_8$ ist besonders bevorzugt Wasserstoff oder Methyl.

Von Interesse ist ein Stabilisatorgemisch enthaltend a) mindestens ein Polyalkylpiperidin der Formel I und b) mindestens ein Polyalkylpiperidin der Formel II, worin $R_6$ Wasserstoff ist und $R_7$ $C_1$-$C_{10}$-Alkyl bedeutet oder $R_6$ und $R_7$ zusammen mit dem Stickstoffatom, an das sie gebunden sind, die Gruppe

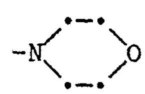

bilden.

$n_1$ und $n_2$ sind bevorzugt jeweils eine ganze Zahl von 2 bis 35, insbesondere 2 bis 20, z.B. 5 bis 10. Besonders bevorzugt ist ein Stabilisatorgemisch enthaltend a) mindestens ein Polyalkylpiperidin der Formel I und b) mindestens ein

Polyalkylpiperidin der Formel II, worin $R_3$ und $R_5$ eine Gruppe der Formel III bedeuten, $R_4$ Hexamethylen ist, $R_6$ und $R_8$ Wasserstoff sind und $R_7$ 1,1,3,3-Tetramethylbutyl bedeutet oder $R_6$ und $R_7$ zusammen mit dem Stickstoffatom, an das sie gebunden sind, eine Gruppe

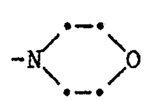

bilden.

Von Interesse ist ein Stabilisatorgemisch enthaltend a) mindestens ein Polyalkylpiperidin der Formel I, worin $R_1$ Wasserstoff ist und $R_2$ $C_1$-$C_4$-Alkylen, bevorzugt Ethylen, bedeutet, und b) mindestens ein Polyalkylpiperidin der Formel II.

Bevorzugt sind Stabilisatorgemische, die aus a) mindestens einem Polyalkylpiperidin der Formel I und b) mindestens einem Polyalkylpiperidin der Formel II bestehen.

Von Interesse sind Stabilisatorgemische, die 1 bis 3, bevorzugt 1 bis 2, Verbindungen der Formel I und 1 bis 3, bevorzugt 1 bis 2, Verbindungen der Formel II enthalten.

Ebenfalls von Interesse sind Stabilisatorsysteme, die eine Verbindung der Formel I und zwei Verbindungen der Formel II enthalten.

Von besonderem Interesse sind Stabilisatorgemische, die eine Verbindung der Formel I und eine Verbindung der Formel II enthalten.

Beispiele für Verbindungen der Formeln I und II sind:

Verbindung 1:

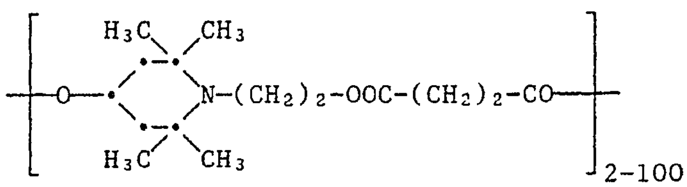

Verbindung 2:

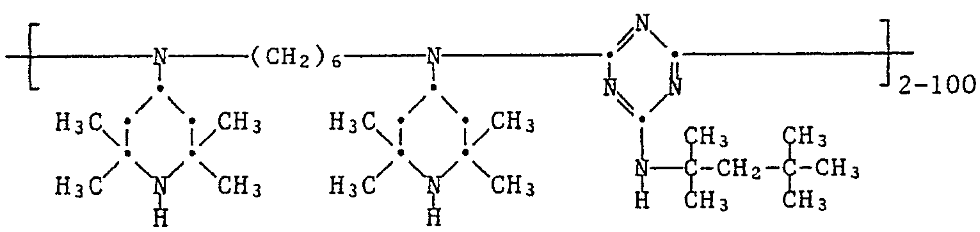

Verbindung 3:

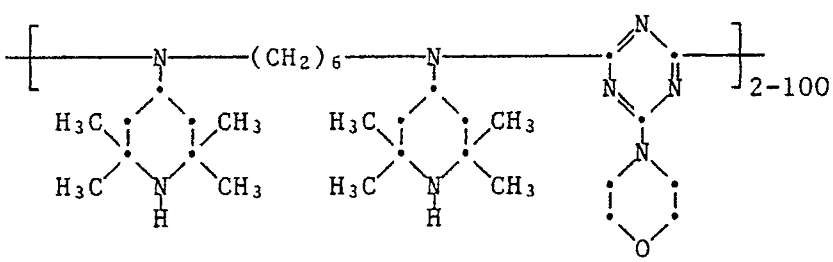

Stabilisatorgemische enthaltend eine Kombination der Verbindungen 1 und 2 oder 1 und 3 oder 1, 2 und 3 sind besonders vorteilhaft.

Das erfindungsgemässe Stabilisatorgemisch eignet sich zum Stabilisieren von synthetischen polymeren gegen lichtinduzierten Abbau. Beispiele für synthetische polymere sind:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo-und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von $\alpha,\beta$-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere ode Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und

gegebenenfalls einem Elastomer als Modifikator, z.B. Poly-2,4,4- trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26.polymerhomolog chemisch abgewandelte derivate von natürlichen Polymeren, wie Cellulose, Naturkautschuk, Gelatine. Beispiele sind Celluloseacetate, -propionate und -butyrate, bzw. die Celluloseether, wie Methylcellulose.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Wässrige Emulsionen synthetischer Kautschuke, wie z.B. Latices von carboxylierten Styrol-Butadien-Copolymeren.

Ein weiterer Gegenstand der Erfindung sind daher Zusammensetzungen, die ein synthetisches polymer und das erfindungsgemässe Stabilisatorgemisch enthalten.

Bei den synthetischen polymeren handelt es sich insbesondere um solche aus den oben angegebenen Gruppen. Polyolefine sind bevorzugt und Polypropylen, Polyethylen und deren Copolymere sind besonders bevorzugt.

Die Komponenten a) und b) des erfindungsgemässen Stabilisatorsystems können einzeln oder untereinander vermischt den zu stabilisierenden synthetischen polymeren zugesetzt werden. Dabei können die Komponenten a) und b) unabhängig voneinander in Mengen von 0,01 bis 4,99 % eingesetzt werden mit der Bedingung, dass die Gesamtmenge an Komponente a) plus Komponente b) 0,05 bis 5 %, bevorzugt 0,05-2 %, bezogen auf das Gesamtgewicht des zu stabilisierenden Materials, beträgt.

Die stabilisierten Polymerzusammensetzungen der Erfindung können zusätzlich auch verschiedene herkömmliche Additive enthalten, wie beispielsweise:

1. Antioxidantien

1.1. Alkylierte Monophenole , z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Dinonyl-4-methylphenol.

1.2. Alkylierte Hydrochinone , z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether , z.B. 2,2′-Thio-bis-(6-tert.-butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

1.4. Alkyliden-Bisphenole , z.B. 2,2′-Methylen-bis-(6-tert.butyl-4-methylphenol), 2,2′-Methylen-bis-(6-tert.butyl-4-ethylphenol), 2,2′-Methylen-bis[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-

tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.-butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis[3,3-bis-(3'-tert.butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methylbenzyl)-6-tert.butyl-4-methyl-phenyl]-terephthalat.

1.5 Benzylverbindungen , z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole , z.B. 4-Hydroxy-laurinsäureanilid, 4-Hydroxy-stearinsäureanilid, 2,4-Bis-(octylmercapto)-6-(3,5-di-tert.-butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der β-(5-tert.Butyl-4-hydroxy-3-methylphenyl)-propion säure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)-ethyl-isocyanurat, N,N'-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.10. Amide der β-(3,5-Di-tert.butyl-4-hydroxyphenyl)-propionsäure , wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole , wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone , wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren , wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.

2.4. Acrylate , wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen , wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine , wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. Oxalsäurediamide , wie z.B. 4,4'-Di-octyloxy-oxanilid, 2,2'-Dioctyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxala-

mid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

3. Metalldesaktivatoren , wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite , wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

5. Peroxidzerstörende Verbindungen , wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren , wie z.B. Kupfersalze in Kombination mit Jodiden und/oder Phosphorverbindungen und Salze des zweiwertigen Mangans.

7. Basische Co-Stabilisatoren , wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel , wie z.B. 4-tert.Butylbenzoesäure, Adipinsäure, Diphenylessigsäure.

9. Füllstoffe und Verstärkungsmittel , wie z.B> Calciumcarbonat, Silikate, Glasfasern, Asbest, Talk, Kaolin, Glimmer, Bariumsulfat, Metalloxide und -hydroxide, Russ, Graphit.

10. Sonstige Zusätze , wie z.B. Weichmacher, Gleitmittel, Emulgatoren, Pigmente, Optische Aufheller, Flammschutzmittel, Antistatika, Treibmittel.

Das Gewichtsverhältnis von erfindungsgemässem Stabilisatorgemisch zu zusätzlichen Additiven kann beispielsweise 1:0,5 bis 1:5 betragen.

Die Einarbeitung des erfindungsgemässen Stabilisatorgemisches bzw. der Einzelkomponenten in das synthetische polymer erfolgt nach bekannten Methoden, beispielsweise vor oder während der Formgebung oder auch durch Aufbringen der gelösten oder dispergierten Verbindungen auf das synthetische polymer, gegebenenfalls unter nachträglichem Verdunsten des Lösungsmittels. Die einzelnen Komponenten des erfindungsgemässen Stabilisatorsystems können auch in Form eines Masterbatches, der diese beispielsweise in einer Konzentration von 2,5 bis 25 Gew.-% enthält, den zu stabilisierenden Materialien zugesetzt werden.

Die erfindungsgemässen Gemische und deren Komponenten können auch vor oder während der Polymerisation oder vor der Vernetzung zugegeben werden.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Eine bevorzugte Ausführungsform der Erfindung sind Zusammensetzungen, enthaltend das erfindungsgemässe Stabilisatorsystem und ein synthetisches polymer, dadurch gekennzeichnet, das die Zusammensetzungen keine sterisch gehinderten Formamidine, insbesondere solche mit der Struktureinheit

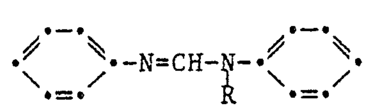 ,

worin

R Alkyl oder Phenyl bedeutet, enthalten.

Ein weiterer Gegenstand der Erfindung ist die Verwendung eines Stabilisatorsystems, enthaltend a) mindestens ein Polyalkylpiperidin der Formel I und b) mindestens ein Polyalkylpiperidin der Formel II, zum Stabilisieren von synthetischen polymeren gegen lichtinduzierten Abbau.

Die folgenden Beispiele erläutern die Erfindung weiter. Alle Prozentangaben beziehen sich auf das Gewicht, soweit nicht anders angegeben.

Beispiel 1: Lichtschutzwirkung in Polypropylenfasern

1000 Teile unstabilisiertes Polypropylenpulver (Schmelzindex bei 230 °C und einer Prüfkraft von 2,16 kp: ca. 15 g/10 min) werden in einem Schnellmischer mit 0,5 Teilen Kalzium-3,5-di-tert-butyl-4-hydroxybenzyl-monoethylphosphonat, 0,5 Teilen Tris(2,4-di-tert-butylphenyl)phosphit, 2,5 Teilen Titandioxid, 1 Teil Kalzium-Stearat und mit 3 Teilen des in Tabelle 1 angeführten Lichtschutzmittels gemischt und anschliessend in einem Extruder bei 220 °C extrudiert und granuliert. Das erhaltene Granulat wird in einer Labor-Schmelzspinnanlage bei einer maximalen Temperatur von 270 °C mit einer Geschwindigkeit von 10 m/s zu einem Multifilament von 12,1 Dezitex versponnen. Dieses wird mit einer Streckzwirnmaschine verstreckt und gezwirnt. Das Streckverhältnis ist 1:3,2, so dass schliesslich Multifilamente von 3,9 Dezitex erhalten werden. Diese Multifilamente werden auf weissem Karton montiert, 20 Minuten im Ofen bei 120 °C behandelt (Simulation des "Tentering") und anschliessend im Xenotest 1200 belichtet.

Als Mass der Schutzwirkung gilt die Belichtungszeit bis zum Erreichen von 50 % Reissfestigkeitsverlust.

Die Ergebnisse sind in Tabelle 1 zusammengefasst.

Tabelle 1: Lichtschutzwirkung in Polypropylen-Multifilament (3,9 Dezitex)

| Lichtschutzmittel | Stunden Xenotest 1200 bis zum Erreichen von 50 % Restreissfestigkeit |
|---|---|
| ohne | 450 |
| 0,3 % Verbindung 1 | 3200 |
| 0,3 % Verbindung 2 | 3600 |
| 0,15 % Verbindung 1 und 0,15 % Verbindung 2 | 4500 |

Verbindung 1:

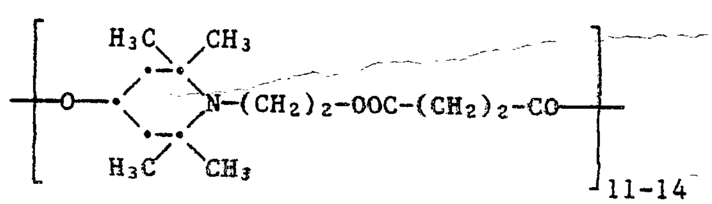

Verbindung 2:

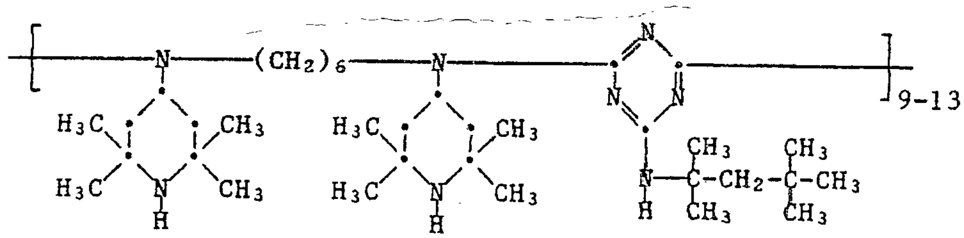

Beispiel 2: Lichtschutzwirkung in Hochdruckpolyethylen-Folien

1000 Teile Polyethylen (Dichte = 0,918 g/cm$^3$; Schmelzindex bei 190 °C und einer Prüfkraft von 2,16 kp: ca. 2 g/10 min) werden mit 0,3 Teilen n-Octadecyl-3-(3',5'-di-tert-butyl-4'-hydroxyphenyl)-propionsäureester und 1,5 Teilen des in Tabelle 2 aufgeführten Lichtschutzmittels in einem Schnellmischer gemischt und anschliessend bei 200 °C extrudiert und granuliert. Aus dem so erhaltenen Granulat werden 200 µm dicke Schlauchfolien geblasen (Blaskopftemperatur 200 °C, Aufblasverhältnis 1:1,8). Aus diesen Folien werden Abschnitte von 55x9 mm$^2$ gestanzt und in einem Belichtungsapparat (SAIREM-SEPAP 12.24) belichtet. In regelmässigen Zeitabständen werden die Prüflinge aus dem Belichtungsapparat genommen und in einem IR-Spektrophotometer auf ihren Carbonylgehalt geprüft. Die Zunahme der Carbonylextinktion bei der Belichtung ist ein Mass für den photooxidativen Abbau des Polymeren (s. L. Blaban et al., J. Polymer Sci. Part C, 22 , 1059-1071 (1969); J.F. Heacock, J. Polymer Sci. Part A-1, 22 , 2921-2934 (1969); D.J. Carlsson and D.M. Wiles, Macromolecules 2 , 587-606 (1969)) und ist erfahrungsgemäss mit einem Abfall der mechanischen Eigenschaften des Polymeren verbunden.

Als Mass der Schutzwirkung gilt die Zeit bis zum Erreichen einer Carbonylextinktion von 0,100.

Die Ergebnisse sind in Tabelle 2 zusammengefasst.

Tabelle 2: Lichtschutzwirkung in Hochdruckpolyethylen-Folien

| Lichtschutzmittel | Stunden SAIREM-SEPAP 12.24 bis zum Erreichen einer Carbonylextinktion von 0,1 |
|---|---|
| ohne | 120 |
| 0,15 % Verbindung 1 | 1640 |
| 0,15 % Verbindung 2 | 1960 |
| 0,075 % Verbindung 1 und 0,075 % Verbindung 2 | 2180 |

Verbindung 1:

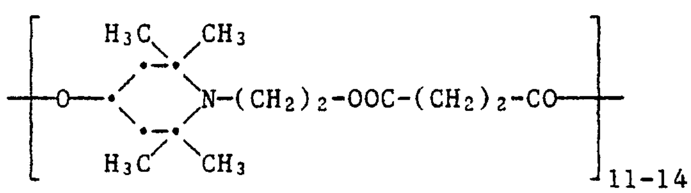

Verbindung 2:

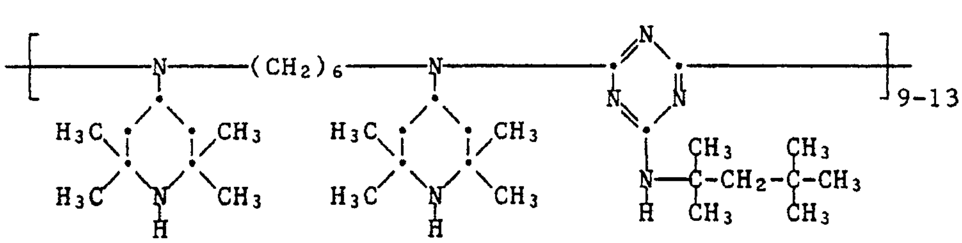

Die Beispiele 1 und 2 zeigen deutlich, dass die Mischung von bestimmten hochmolekularen Polyalkylpiperidinen im Schutz gegen den lichtinduzierten Abbau von organischem Material einen ausgeprägten Synergismus aufweist.

## Ansprüche

1. Ein Stabilisatorgemisch enthaltend
a) mindestens ein Polyalkylpiperidin der Formel I,

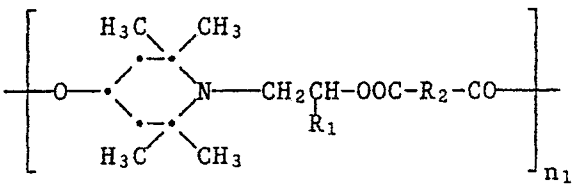

(I)

worin $R_1$ Wasserstoff oder Methyl bedeutet, $R_2$ eine direkte Bindung oder $C_1$-$C_{10}$-Alkylen ist und $n_1$ eine ganze Zahl von 2 bis 100 darstellt, und
b) mindestens ein Polyalkylpiperidin der Formel II,

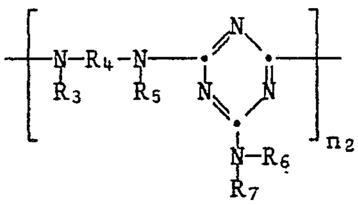

(II)

worin
$R_3$, $R_5$ und $R_6$ unabhängig voneinander Wasserstoff, $C_1$-$C_4$-Alkyl, Phenyl, durch -OH und/oder $C_4$-$C_8$-Alkyl substituiertes Phenyl, Benzyl, durch -OH und/oder $C_4$-$C_8$-Alkyl substituiertes Benzyl oder eine Gruppe der Formel III bedeuten,

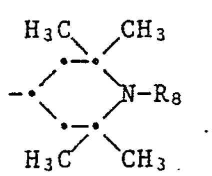

(III)

worin $R_8$ Wasserstoff, $C_1$-$C_4$-Alkyl, durch -OH substituiertes $C_1$-$C_4$-Alkyl, Benzyl, Acyl,acetyl, oder crotonoyl bedeutet, mit der Bedingung, dass das an das Stickstoffatom der Piperidylgruppe gebundene C-Atom ein primäres Kohlenstoffatom ist, $R_4$ $C_2$-$C_8$-Alkylen ist und $R_7$ Wasserstoff, $C_1$-$C_{10}$-Alkyl, Phenyl, durch -OH und/oder $C_4$-$C_8$-Alkyl substituiertes Phenyl, Benzyl, durch -OH und/oder $C_4$-$C_8$-Alkyl substituiertes Benzyl oder eine Gruppe der Formel III bedeutet oder die Reste $R_6$ und $R_7$ zusammen mit dem Stickstoffatom, an das sie gebunden sind, einen 6-gliedrigen heterocyclischen Ring bilden, $n_2$ eine ganze Zahl von 2 bis 100 ist und mindestens einer de Reste $R_3$, $R_5$, $R_6$ und $R_7$ eine Gruppe der Formel III darstellt.

2. Ein Stabilisatorgemisch gemäss Anspruch 1, worin $R_3$ und $R_5$ eine Gruppe der Formel III bedeuten.

3. Ein Stabilisatorgemisch gemäss Anspruch 1, worin $R_8$ Wasserstoff oder Methyl bedeutet.

4. Ein Stabilisatorgemisch gemäss Anspruch 1, worin $R_6$ Wasserstoff ist und $R_7$ $C_1$-$C_{10}$-Alkyl bedeutet

oder $R_6$ und $R_7$ zusammen mit dem Stickstoffatom, an das sie gebunden sind, die Gruppe

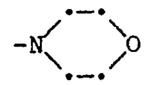

bilden.

**5.** Ein Stabilisatorgemisch gemäss Anspruch 4, worin die Reste $R_6$ und $R_7$ zusammen mit dem Stickstoffatom, an das sie gebunden sind, die Gruppe

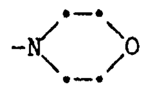

bilden.

**6.** Ein Stabilisatorgemisch gemäss Anspruch 1, worin $n_1$ und $n_2$ unabhängig voneinander ganze Zahlen von 2 bis 35 sind.

**7.** Ein Stabilisatorgemisch gemäss Anspruch 1, worin $R_3$ und $R_5$ eine Gruppe der Formel III bedeuten, $R_4$ Hexamethylen ist, $R_6$ und $R_8$ Wasserstoff sind und $R_7$ 1,1,3,3-Tetramethylbutyl bedeutet oder $R_6$ und $R_7$ zusammen mit dem Stickstoffatom, an das sie gebunden sind, eine Gruppe

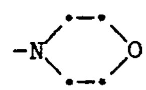

bilden.

**8.** Ein Stabilisatorgemisch gemäss Anspruch 1, worin $R_2$ $C_1$-$C_4$-Alkylen und $R_1$ Wasserstoff bedeuten.

**9.** Ein Stabilisatorgemisch gemäss Anspruch 8, worin $R_2$ Ethylen bedeutet.

**10.** Ein Stabilisatorgemisch gemäss Anspruch 1, bestehend aus a) mindestens einem Polyalkylpiperidin der Formel I und b) mindestens einem Polyalkylpiperidin der Formel II.

**11.** Zusammensetzung enthaltend ein synthetisches Polymer und ein Stabilisatorgemisch gemäss Anspruch 1.

**12.** Zusammensetzung gemäss Anspruch 11, dadurch gekennzeichnet, dass das synthetische Polymer ein Polyolefin ist.

**13.** Verwendung von einem Stabilisatorgemisch gemäss Anspruch 1 zum Stabilisieren von synthetischen Polymeren gegen lichtinduzierten Abbau.

## Claims

**1.** A stabilizer mixture containing
a) at least one polyalkyl piperidine of the formula I

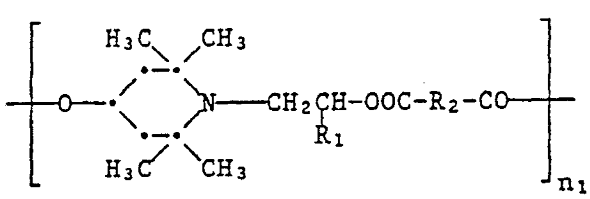

(I)

in which $R_1$ is hydrogen or methyl, $R_2$ is a direct bond or $C_1$-$C_{10}$alkylene and $n_1$ is an integer from 2 to 100, and

b) at least one polyalkylpiperidine of the formula II

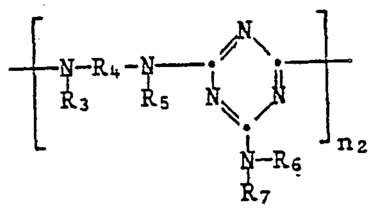

(II)

in which $R_3$, $R_5$ and $R_6$ independently of one another are hydrogen, $C_1$-$C_4$alkyl, phenyl, phenyl which is substituted by -OH and/or $C_4$-$C_8$alkyl, benzyl or benzyl which is substituted by -OH and/or $C_4$-$C_8$alkyl or are a group of the formula III

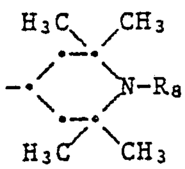

(III)

in which R8 is hydrogen, $C_1$-$C_4$alkyl, $C_1$-$C_4$alkyl which is substituted by -OH, or is benzyl, allyl, acetyl or crotonyl, subject to the condition that the C atom attached to the nitrogen atom of the piperidyl group is a primary carbon atom, $R_4$ is $C_2$-$C_8$alkylene and $R_7$ is hydrogen, $G_1$-$C_{10}$alkyl, phenyl, phenyl which is substituted by -OH and/or $C_4$-$C_8$alkyl, benzyl or benzyl which is substituted by -OH and/or $C_4$-$C_8$alkyl, or is a group of the formula III, or the radicals $R_6$ and $R_7$, together with the nitrogen atom to which they are attached, form a 6-membered heterocyclic ring, $n_2$ is an integer from 2 to IOO, and at least one of the radicals $R_3$, $R_5$, $R_6$ and $R_7$, is a group of the formula III.

2. A stabilizer mixture according to claim 1, in which $R_3$ and $R_5$ are a group of the formula III.

3. A stabilizer mixture according to claim 1, in which $R_8$ is hydrogen or methyl.

4. A stabilizer mixture according to claim 1, in which $R_6$ is hydrogen and $R_7$ is $C_1$-$C_{10}$alkyl, or $R_6$ and $R_7$, together with the nitrogen atom to which they are attached, form the group

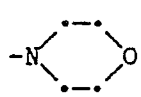

.

5. A stabilizer mixture according to claim 4, in which the radicals $R_6$ and $R_7$, together with the nitrogen atom to which they are attached, form the group

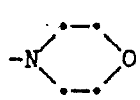

.

6. A stabilizer mixture according to claim 1, in which $n_1$ and $n_2$ independently of one another are integers from 2 to 35.

7. A stabilizer mixture according to claim 1, in which $R_3$ and $R_5$ are a group of the formula III, $R_4$ is hexamethylene, and $R_8$ are hydrogen and $R_7$ is 1,1,3,3-tetramethylbutyl, or $R_6$ and $R_7$, together with the nitrogen atom to which they are attached, form a group

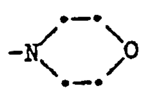 .

8. A stabilizer mixture according to claim 1, in which $R_2$ is $C_1$-$C_4$alkylene and $R_1$ is hydrogen.

9. A stabilizer mixture according to claim 8, in which $R_2$ is ethylene.

10. A stabilizer mixture according to claim 1, consisting of a) at least one polyalkylpiperidine of the formula I and b) at least one polyalkylpiperidine of the formula II.

11. A composition containing a synthetic polymer and a stabilizer mixture according to claim 1.

12. A composition according to claim 11, wherein the synthetic polymer is a polyolefin.

13. Use of a stabilizer mixture according to c1aim 1 for stabilizing synthetic polymers against degradation induced by light.

## Revendications

1. Mélange stabilisant qui contient :
   a) au moins une polyalkyl-pipéridine répondant à la formule I:

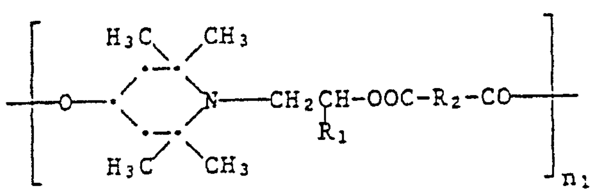

(I)

dans laquelle
$R_1$ représente l'hydrogène ou un méthyle,
$R_2$ représente une liaison directe ou un alkylène en $C_1$-$C_{10}$ et
$n_1$ représente un nombre entier de 2 à 100, et b) au moins une polyalkyl-pipéridine répondant à la formule II:

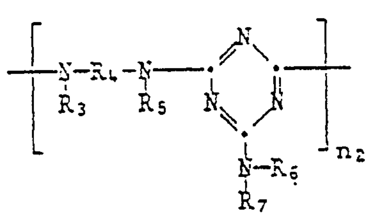

(II) .

dans laquelle
$R_3$, $R_5$ et $R_6$ représentent chacun, indépendaent les uns des autres, l'hydrogène, un alkyle en $C_1$-$C_4$, un phényle, un phényle porteur d'un -OH et/ou d'un alkyle en $C_4$-$C_8$, un benzyle, un benzyle porteur d'un -OH et/ou d'un alkyle en $C_4$-$C_8$ ou un radical répondant à la formule III:

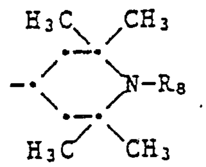

(III)

dans laquelle R8 représente l'hydrogène, un alkyle en $C_1$-$C_4$, un alkyle en $C_1$-$C_4$ porteur d'un -OH, d'un benzyle, un allyle, un acétyle ou un crotonoyle, avec la condition que l'atome de carbone lié à l'atome d'azote du radical pipéridyle soit un atome de carbone primaire,

$R_4$ représente un alkylène en $C_2$-$C_8$,

$R_7$ représente l'hydrogène, un alkyle en $C_1$-$C_{10}$, un phényle, un phényle porteur d'un -OH et/ou d'un alkyle en $C_4$-$C_8$, un benzyle, un benzyle porteur d'un -OH et/ou d'un alkyle en $C_4$-$C_8$, ou un radical de formule III, ou

$R_6$ et $R_7$ forment ensemble, et avec l'atome d'azote auquel ils sont liés, un hétérocycle à six maillons, et

$n_2$ représente un nombre entier de 2 à 100, au moins un des symboles $R_3$, $R_5$, $R_6$ et $R_7$ représentant un radical de formule III.

2. Mélange stabilisant selon la revendication 1 dans lequel $R_3$ et $R_5$ représentent chacun un radical de formule III.

3. Mélange stabilisant selon la revendication 1 dans lequel $R_8$ représente l'hydrogène ou un méthyle.

4. Mélange stabilisant selon la revendication 1 dans lequel $R_6$ représente l'hydrogène et $R_7$ un alkyle en $C_1$-$C_{10}$, ou $R_6$ et $R_7$ forment ensemble, et avec l'atome d'azote auquel ils sont liés, un radical

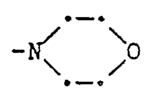 .

5. Mélange stabilisant selon la revendication 4 dans lequel $R_6$ et $R_7$ forment ensemble et avec l'atome d'azote auquel ils sont liés, un radical

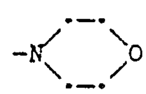 .

6. Mélange stabilisant selon la êvendication 1 dans lequel $n_1$ et $n_2$ représentent chacun, indépendamment l'un de l'autre, un nombre entier de 2 à 35.

7. Mélange stabilisant selon la revendication 1 dans lequel $R_3$ et $R_5$ représentent chacun un radical de formule III, $R_4$ représente un radical hexaméthylène, $R_6$ et $R_8$ représentent chacun l'hydrogène et $R_7$ représente un radical tétraméthyl-1,1,3,3 butyle, ou $R_6$ et $R_7$ forment ensemble, et avec l'atome d'azote auquel ils sont liés, un radical

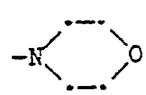 .

8. Mélange stabilisant selon la revendication 1 dans lequel $R_2$ représente un alkylène en $C_1$-$C_4$ et $R_1$ l'hydrogène.

9. Mélange stabilisant selon la revendication 8 dans lequel $R_2$ représente un radical éthylène.

**10.** Mélange stabilisant selon la revendication 1 qui est constitué a) d'au moins une polyalkyl-pipéridine de formule I et b) d'au moins une polyalkyl-pipéridine de formule II.

**11.** Composition contenant un polymère synthétique et un mélange stabilisant selon la revendication 1.

**12.** Composition selon la revendication 11 caractérisée en ce que le polymère synthétique est une polyoléfine.

**13.** Application d'un mélange stabilisant selon la revendication 1 à la stabilisation de polymères synthétiques contre la dégradation induite par la lumière.